# EUROPÄISCHE PATENTANMELDUNG

(11) **EP 1 920 680 A2**
(43) Veröffentlichungstag der Anmeldung: **14.05.2008**
(21) Anmeldenummer: 07021695.7
(22) Anmeldetag: 08.11.2007
(51) Int. Cl.: A47B 31/00, B62B 3/00

(54) **Lagerungs-und Transportvorrichtung mit einem lösbaren Arretierungsmittel**

(30) Priorität: 08.11.2006 DE 202006017077 U
(71) Anmelder: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Sögel (DE); Trinczek, Reinhold, 21514 Büchen (DE)
(74) Vertreter: Philipp, Matthias

(57) **Zusammenfassung**

Lagerungs- und Transportvorrichtung mit einem im wesentlichen rechteckigen Sockelelement, das in vier Eckbereichen jeweils mit einer Aufnahmehülse zum lösbaren Aufnehmen einer Tragstange versehen ist, dadurch gekennzeichnet, daß mindestens eine der Aufnahmehülsen (16) mit einem lösbaren Arretierungsmittel zum kraft- und/oder formschlüssigen Zusammenwirken mit einer Tragstange versehen ist, wobei das Arretierungsmittel ein Herausnehmen der Tragstange aus der Aufnahmehülse in einem Haltezustand verhindert und in einem Lösezustand zuläßt.

## Beschreibung

Die Erfindung betrifft eine Lagerungs- und Transportvorrichtung mit einem im wesentlichen rechteckigen Sockelelement, das in vier Eckbereichen jeweils mit einer Aufnahmehülse zum lösbaren Aufnehmen einer Tragstange versehen ist.

Derartige Lagerungs- und Transportvorrichtungen sind weithin im Gebrauch, wobei in den in der Aufnahmehülse aufgenommenen Tragstangen Halterungsmittel in Form von Ausschnitten, Öffnungen oder in sonstiger Form vorgesehen sind und zur lösbaren Halterung von waagerechten, regalbodenartigen Lagerungselementen dienen, die mit gegenseitigem vertikalen Abstand daran gehalten sind und auf denen Güter der unterschiedlichsten Art aufnehmbar sind.

Wenn eine derartige Lagerangs- und Transportvorrichtung ihrerseits bewegt oder transportiert werden soll, stellt sich häufig das Problem, daß sich die in die Aufnahmehülsen eingesteckten Tragstangen unbeabsichtigt daraus lösen können, oder, wenn mehrere Sockelelemente aufeinander gestapelt sind, daß sich diese unbeabsichtigt voneinander lösen können.

Die Aufgabe der Erfindung besteht daher darin, eine gattungsgemäße Lagerungs- und Transportvorrichtung dahingehend zu verbessern, daß sich die Tragstangen nicht unbeabsichtigt von den Aufnahmehülsen und/oder mehrere aufeinander gestapelte Sockelelemente nicht voneinander lösen können.

Diese Aufgabe wird erfindungsgemäß in einer ersten Ausführungsform dadurch gelöst, daß mindestens eine der Aufnahmehülsen mit einem lösbaren Arretierungsmittel zum kraft-und/oder formschlüssigen Zusammenwirken mit einer Tragstange versehen ist, wobei das Arretierungsmittel ein Herausnehmen der Tragstange aus der Aufnahmehülse in einem Haltezustand verhindert und in einem Lösezustand zuläßt.

Es kann vorgesehen sein, daß das Arretierungsmittel formschlüssig mit einem Halterungsmittel der Tragstange zusammenwirkt. Zweckmäßigerweise ist vorgesehen, daß das Arretierungsmittel ein in Öffnungen oder Bohrungen der Aufnahmehülse und der Tragstange greifendes Verriegelungselement aufweist. Das Verriegelungselement kann als Federzunge oder Haken oder als Feder- oder Klappsplint ausgebildet sein.

Alternativ kann vorgesehen sein, daß das Verriegelungselement als feder- oder gewichtsbelasteter, schwenkbarer Rasthebel ausgebildet ist. Der Rasthebel kann V-förmig abgewinkelt sein und einen durch eine Öffnung in die Aufnahmehülse schwenkbaren Verriegelungsarm und einen von der Aufnahmehülse vorstehenden Betätigungsarm aufweisen.

Es kann vorgesehen sein, daß die Aufnahmehülse (und auch die aufzunehmenden Tragstangen) runden, mehreckigen, rechteckigen oder quadratischen Querschnitt aufweisen, wobei der Rasthebel an einer Seitenwand um eine senkrecht zu einer Längsachse der Aufnahmehülse angeordnete Schwenkachse schwenkbar gehalten ist.

Bevorzugt ist vorgesehen, daß der Rasthebel an seinem Betätigungsarm mit einem Gewicht versehen ist, oder daß eine Feder an dem Betätigungsarm angreift.

Die Aufgabe der Erfindung wird in einer zweiten Ausführungsform bei einer gattungsgemäßen Lagerangs- und Transportvorrichtung durch die Maßnahme gelöst, daß mindestens eine Aufnahmehülse ein lösbares Sockelarretierungsmittel zum kraft- und/oder formschlüssigen Zusammenwirken mit einer Aufnahmehülse eines darauf oder darunter gesetzten weiteren Sockelelements und/oder einer darunter angesetzten Tragstange aufweist, wobei das Sockelarretierungsmittel ein Lösen des Sockelelements von dem weiteren Sockelelement und/oder von der Tragstange in einem Haltezustand verhindert und in einem Lösezustand zuläßt.

Bevorzugt ist vorgesehen, daß das Sockelarretierungsmittel ein in Öffnungen oder Bohrungen der mindestens einen Aufnahmehülse oder Tragstange greifendes Verriegelungselement aufweist. Das Verriegelungselement kann als Federzunge oder Haken oder als Feder- oder Klappsplint ausgebildet sein.

Allgemein kann vorgesehen sein, daß mindestens eine Aufnahmehülse unterseitig mit einem Zentrieransatz zum zentrierenden Zusammenwirken mit einer Aufnahmehülse eines darunter befindlichen, weiteren Sockelelements oder mit einer von unten angesetzten Tragstange versehen ist.

In Weiterbildung der Erfindung kann vorgesehen sein, daß in mindestens eine der Aufnahmehülsen eine Tragstange eingesetzt ist, die aus zwei oder mehr Stangenteilen zusammengesetzt ist, wobei an mindestens einem Verbindungsbereich zwischen zwei Stangenteilen ein lösbares Stangenarretierungsmittel zum kraft- und/oder formschlüssigen Zusammenwirken mit den Stangenteilen angeordnet ist, wobei das Stangenarretierungsmittel ein Trennen der Stangenteile in einem Haltezustand verhindert und in einem Lösezustand zuläßt.

Es kann vorgesehen sein, daß das Stangenarretierungsmittel ein in Öffnungen der Stangenteile greifendes Verriegelungselement aufweist. Das Verriegelungselement kann als Federzunge, Haken, Feder- oder Klappsplint, U- oder C-föhniger Bügel oder federarretiertes Steckelement ausgebildet sein.

Es kann vorgesehen sein, daß das Stangenarretierungsmittel eine Federzunge aufweist, die an einem Endabschnitt an einem Stangenteil gehalten ist und mit einem freien, federnden Endabschnitt mit einer Öffnung in einem anderen Stangenteil zusammenwirkt.

Weiter kann vorgesehen sein, daß die Stangenteile als Hohlprofile ausgebildet sind und die Federzunge im Inneren eines Hohlprofils angeordnet ist.

Die Federzunge kann an ihrem freien Endabschnitt einen hakenförmigen Rastabschnitt auf weisen, der in unbelastetem Zustand der Federzunge aus dem Hohlprofil nach außen vorsteht.

Weitere Vorteile und Merkmale der Erfindung ergeben sich aus der nachfolgenden Beschreibung bevorzugter Ausführungsbeispiele, wobei auf eine Zeichnung Bezug genommen ist. Es zeigt:
Fig. 1 eine schematische perspektivische Ansicht einer erfindungsgemäßen Lagerungs- und Transportvorrichtung mit eingesteckten Tragstangen und zwei Lagerungselementen;
Fig. 2 eine perspektivische Ansicht eines Lagerungselements;
Fig. 3 eine perspektivische Ansicht eines Sockelelements;
Fig. 4 eine vergrößerte Darstellung eines Einhänge-Endabschnitts eines Lagerungselements;
Fig. 5 eine vergrößerte Darstellung einer Tragstange;
Fig. 6 eine Ansicht eines oberen Eckbereiches der Vorrichtung und einer Tragstange in einer gegenüber Fig. 1 um 180° verdrehten Orientierung, mit eingesetztem Tragelement;
Fig. 7 eine Ansicht eines unteren Eckbereichs der Vorrichtung mit einer eingesteckten Tragstange, in einer gegenüber Fig. 1 um 180° verdrehten Orientierung, mit mehreren gestapelten Lagerungselementen;
Fig. 8 eine perspektivische, schematische Darstellung einer Variante einer Tragstange;
Fig. 9 eine alternative Ausführungsform einer Lagerungs- und Transportvorrichtung, wobei zwei Teilvorrichtungen niedrigerer Höhe übereinander gestapelt dargestellt sind;
Fig. 10 eine perspektivische Ansicht einer Teilvorrichtung nach Fig. 9 mit einer Orientierung der Tragstangen entsprechend Fig. 6 und 7;
Fig. 11 eine erste Ausführungsform eines Arretierungsmittels in einem Haltezustand;
Fig. 12 das Arretierungsmittel nach Fig. 11 in einem Lösezustand;
Fig. 13 das Arretierungsmittel nach Fig. 11 in einem Lösezustand;
Fig. 13a eine Variante des Arretierungsmittels nach Fig. 11 bis 13;
Fig. 14 ein Sockelarretierungsmittel in einem unteren Endabschnitt einer Aufnahmehülse;
Fig. 15 ein Sockelarretierungsmittel in einem oberen Endabschnitt einer Aufnahmehülse;
Fig. 16 das Sockelarretierungsmittel nach Fig. 14 in Zusammenwirken mit einer von unten angesetzten Tragstange;
Fig. 17 und 18 unterschiedliche Varianten des tragstangenseitigen Teils des Sockelarretierungsmittels;
Fig. 19 eine Variante des Sockelarretierungsmittels nach Fig. 14-18;
Fig. 20 ein Stangenarretierungsmittel;
Fig. 21 eine alternative Ausführungsform zu den in Fig. 11 bis 13 und 17, 18 dargestellten (Sockel-)Arretierungsmitteln;
Fig. 22 einen Längsschnitt entlang Linie A-A in Fig. 20, und
Fig. 23 bis 25 zwei weitere alternative Stangenarretierungsmittel.

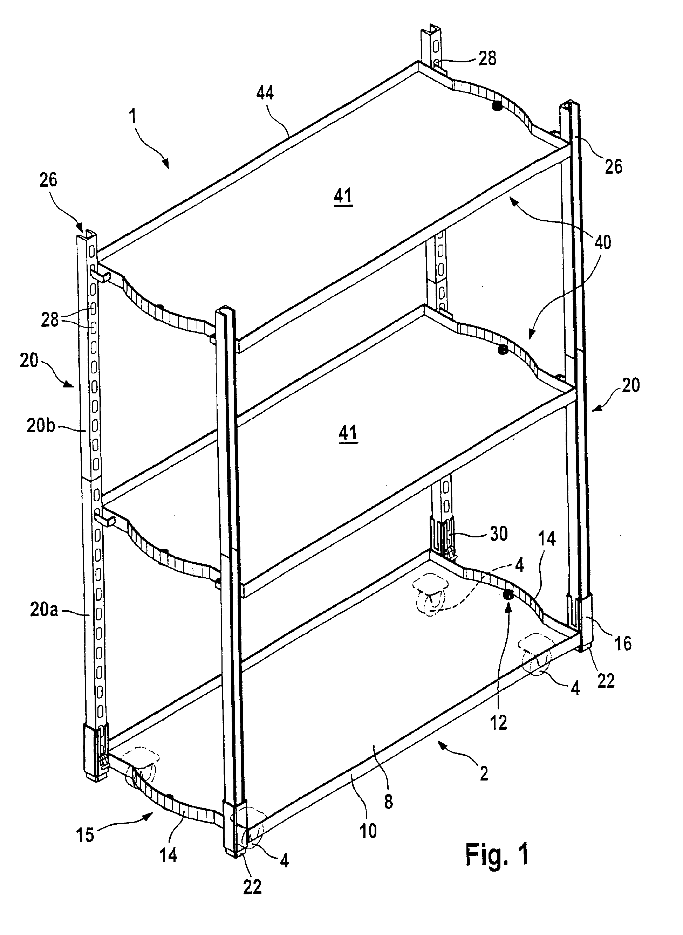

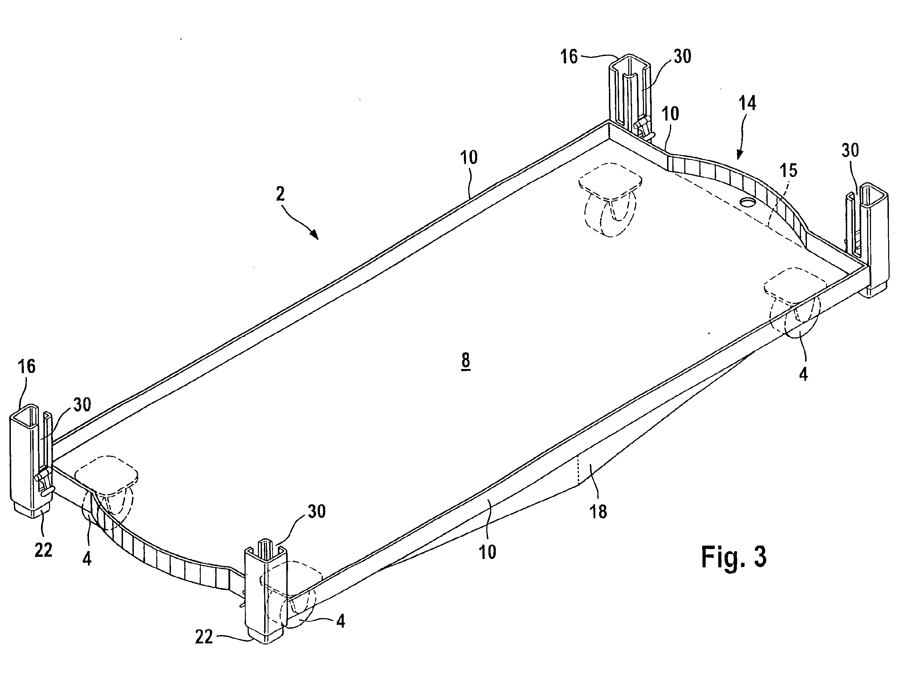

Fig. 1 zeigt in einer perspektivischen Ansicht eine erfindungsgemäße Lagerungsvorrichtung 1, die in diesem Beispiel speziell für Lagerung und Transport von Pflanztöpfen ausgebildet ist, mit einem im wesentlichen rechteckigen Sockelelement 2, welches unterseitig mit Rollen 4 versehen ist. Zwei oder alle vier Rollen können schwenkbar und mindestens eine von ihnen feststellbar sein. Das Sockelelement 2 weist einen im wesentlichen ebenen, horizontalen Boden 8 auf, der als Stellfläche für zu lagernde bzw. transportierende Gegenstände, z.B. Pflanztöpfe, dient, wobei das Sockelelement wannenförmig ausgebildet ist und eine umlaufend geschlossen verlaufende Seitenwand 10 aufweist. In zwei einander gegenüberliegenden Randbereichen ist jeweils ein Überlauf 12 angeordnet, der verstellt werden kann, um einen Flüssigkeitspegel (Wasserstand) auf dem Boden 8 einzustellen. Die Überläufe 12 sind jeweils im Bereich einer Erweiterung 14 des ansonsten rechteckförmigen Bodens 8 angeordnet, so daß eine rechteckförmige Stellfläche (vgl. Schmalseite 15 in Fig. 3) verbleibt, in der keine Überläufe angeordnet sind. Die Erweiterungen 14 können jede zweckmäßige Form haben, beispielsweise rechteckig, mehreckig oder frei geformt.

In allen vier Eckbereichen des Sockelelements 2 befindet sich jeweils eine Aufnahmehülse 16 mit quadratischem Innen- und Außenquerschnitt, senkrecht zu dem Boden 8 ausgerichtet, deren Zweck darin besteht, jeweils eine Tragstange 20 lösbar aufzunehmen.

Jede Aufnahmehülse 16 weist an ihrem unteren Ende einen Anschlag 22 auf, bei dem es sich um ein massives Teil mit quadratischem Querschnitt oder um eine Vierkanthülse mit kleinerem Querschnitt als der der Aufnahmehülse handeln kann. Höhe und Anordnung des Anschlags 22 legen die Einstecktiefe der Tragstangen 20 in die Aufnahmehülsen 16 fest.

Der Boden 8 des Sockels 2 ist an seinen Längsseiten unterhalb der Seitenwand 10 mit einer Verstärkung 18 versehen, um die Belastungsfähigkeit zu vergrößern.

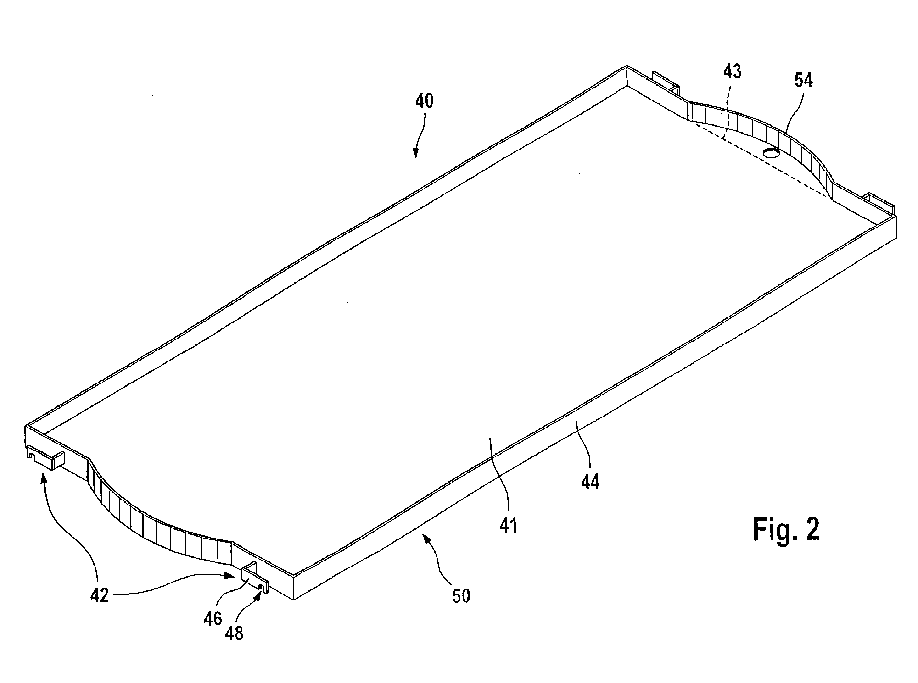

An den vier Tragstangen 20 sind eine Anzahl von Lagerungselementen 40, hier zwei, lösbar fixiert, von denen eine in Fig. 2 mehr im einzelnen dargestellt ist. Das Lagerungselement 40 weist einen im wesentlichen ebenen Boden 41 und eine diesen wannenartig umschließende Seitenwand 44 auf. Im Bereich von Schmalseiten 43 weist das Lagerungselement jeweils eine Erweiterung 54 auf, die ebenso wie bei dem Sockelelement der Aufnahme eines Überlaufs (nicht dargestellt) dient, so daß eine rechteckförmige Stellfläche ohne Überläufe frei verfügbar bleibt. Die Erweiterung 54 ist in diesem Beispiel kreissektorförmig, kann allerdings jede beliebige Form aufweisen.

Jedes Lagerungselement 40 ist mit vier hakenförmigen Halterungselementen 42 versehen, die der Fixierung an den Tragstangen 20 dienen. In diesem Beispiel sind die Halterungselemente 42 in den Eckbereichen im Bereich der Schmalseiten 43 des Lagerungselements angeordnet. Jedes Halterungselement 42 weist einen Einhänge-Endabschnitt 46 auf, der frei endet, in diesem Beispiel in Richtung auf die jeweils benachbarte Längsseite 50 des Lagerungselements. In einer anderen Bauform endet der Einhänge-Endabschnitt parallel zu den Längsseiten 50.

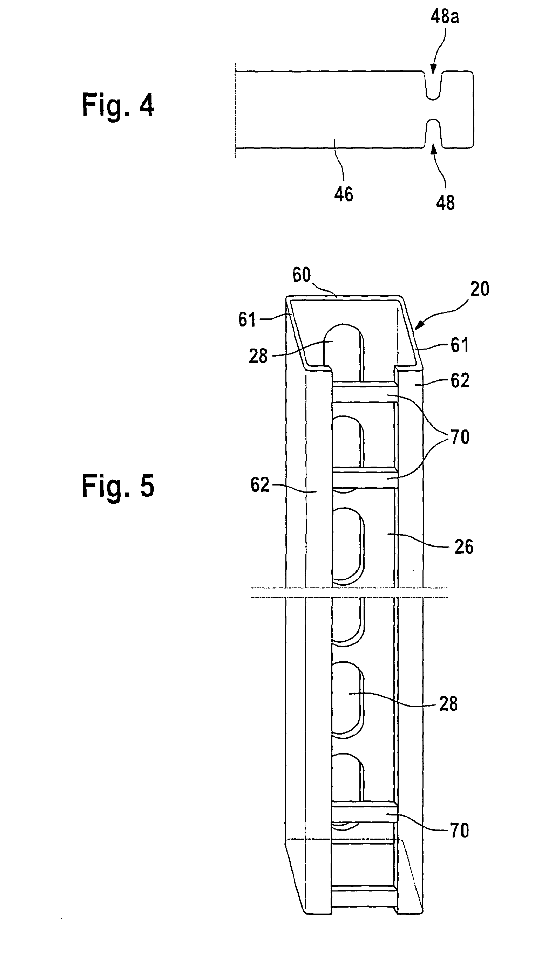

Jeder Einhänge-Endabschnitt 46 ist mit einer Ausnehmung 48 (oder zwei, Fig. 4) versehen, die ein formschlüssiges Einhängen in eine Hohlprofilwand einer Tragstange 20 ermöglicht.

Fig. 4 zeigt einen Einhänge-Endabschnitt 46 in vergrößerter Darstellung, wobei neben der genannten Ausnehmung 48 noch eine gegenüberliegende, zweite Ausnehmung 48a dargestellt ist, die ein Einhängen des Lagerungselements 40 in umgekehrter Orientierung (Boden weist nicht nach oben, sondern nach unten) ermöglicht.

Fig. 5 zeigt eine erste Ausführungsform einer Tragstange 20, die durch ein im Querschnitt quadratisches, fast geschlossenes, C-förmiges Hohlprofil gebildet ist, welches einen Stegabschnitt 60, zwei parallele Schenkelabschnitte 61 und zwei von diesen abgehende, einen Längsschlitz 26 bildende, zueinander gerichtete Randabschnitte 62 aufweist. An beiden Endbereichen der Tragstange 20 befinden sich jeweils zwei mit gegenseitigem Abstand angeordnete Stege 70, die den Längsschlitz 26 überbrücken.

In dem Stegabschnitt 60 sind über die gesamte Länge der Tragstange 20 Einhängeausnehmungen 28 mit gegenseitigem Abstand angeordnet, während auf der gegenüberliegenden Seite zwischen den Randabschnitten 62 der durchgehende Längsschlitz 26 gebildet ist.

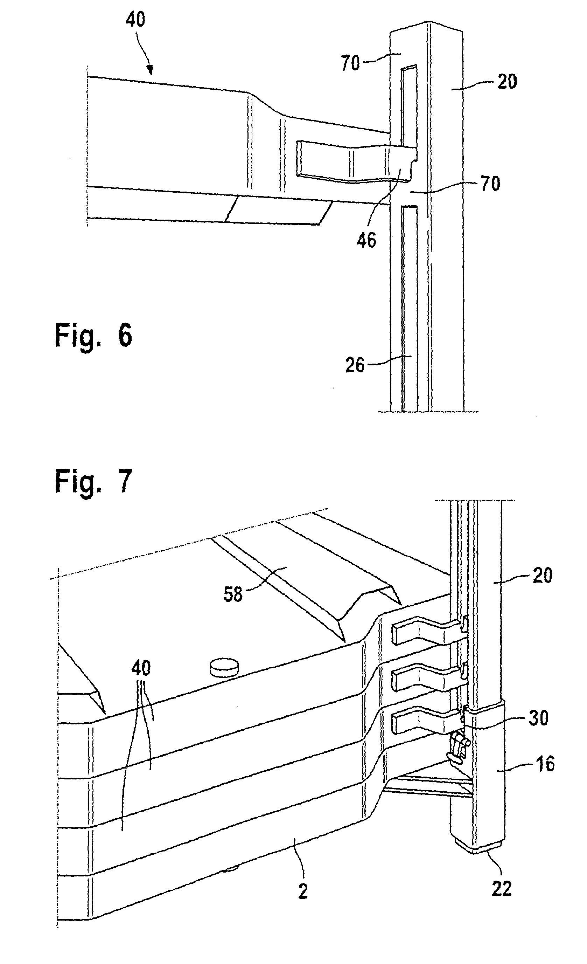

Es besteht die Möglichkeit, die Tragstangenteile so in das Sockelelement einzusetzen, daß nicht die Einhängeausnehmungen zueinander gerichtet sind, wie in Fig. 1 dargestellt sind, sondern in einer um 180° gegenüber der Darstellung nach Fig. 1 gedrehten Position, so daß die Längsschlitze 26 der Tragstangen zueinander weisen. Dies ermöglicht eine platzsparende Anordnung mehrerer Lagerungselemente, wie weiter unten noch zu Fig. 6 und 7 erläutert wird.

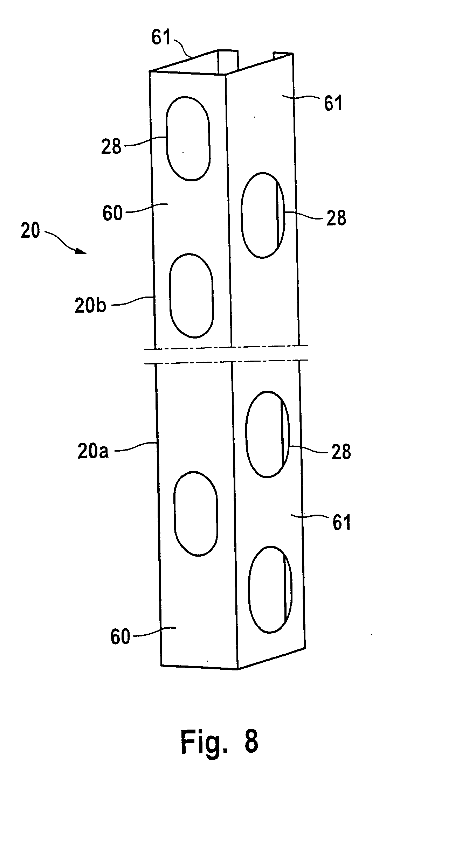

Die Einhängeausnehmungen 28 können in jeder beliebigen zweckmäßigen Anordnung, Anzahl, gegenseitigem Abstand usw. angeordnet sein. In zwei benachbarten Hohlprofilwänden einer C-förmigen Tragstange (entsprechend dem Stegabschnitt 60 und einem Schenkelabschnitt 61 nach Fig. 5) können verschieden große und gleich große Einhängeausnehmungen 28 ausgebildet sein. Dadurch können in ein und derselben Lagerungsvorrichtung unterschiedliche Lagerungselemente 40 eingesetzt werden, bspw. solche nach Fig. 2, bei denen die Einhänge-Endabschnitte 46 parallel zu einer Schmalseite des Lagerungselements ausgerichtet sind, und auch solche, bei denen Einhänge-Endabschnitte angebracht sind, die in Längsrichtung bzw. parallel zu den Längsseiten des Lagerungselements ausgerichtet sind (nicht dargestellt), wodurch in der Praxis eine variable Nutzung möglich ist. Es kann zweckmäßig sein, in allen drei Hohlprofilwänden 60, 61 Einhängeausnehmungen vorzusehen, die nach Bedarf gegeneinander in Längsrichtung versetzt sein können. Aus Stabilitätsgründen kann es ferner zweckmäßig sein, die Einhängeausnehmungen in benachbarten Hohlprofilwänden in Längsrichtung der Tragstange gesehen versetzt anzuordnen, wie Fig. 8 zeigt.

Fig. 6 und 7 erläutern eine Möglichkeit einer platzsparenden Anordnung mehrerer Lagerungselemente 40 auf einem Sockelelement 2, wobei die Tragstangen 20 gegenüber der Anordnung nach Fig. 1 um 180° verdreht in die Aufnahmehülsen 16 eingesteckt sind, so daß die Längsschlitze 26 zueinander (nach innen) gerichtet sind. Dabei ragen die Einhänge-Endabschnitte 46 der Lagerungselemente in die Längsschlitze, während die Einhänge-Endabschnitte eines zu unterst auf dem Sockelelement aufliegenden Lagerungselements durch die Ausnehmungen 30 der Aufnahmehülsen 16 ragen, wodurch eine Gewichtsentlastung erzielt wird.

Fig. 6 zeigt, wie ein oberstes Lagerungselement in die Stege 70 eingehängt werden kann, so daß die Tragstangen in ihrer gegenseitigen Position stabilisiert werden. Bei einer Ausbildung der Einhänge-Endabschnitte 46 gemäß Fig. 4 (mit zwei Ausnehmungen 48, 48a) kann das oberste Lagerungselement, das in Fig. 6 dargestellt ist, umgekehrt eingehängt werden, was den Vorteil hat, daß es bei einer Lagerung im Freien nicht mit Regenwasser vollaufen kann.

Ergänzend zeigt Fig. 7 Verstärkungsprofile 58, die zur Verstärkung und Zentrierung auf den Unterseiten der Lagerungselement 40 angebracht sind. Die Verstärkungsprofile können in Längs- und/oder Querrichtung des Lagerungselements angebracht sein.

Um auch solche Lagerungselemente in der beschriebenen gewichtsentlastenden Weise auf einem Sockelelement auflegen zu können, bei denen die Einhänge-Endabschnitte in Längsrichtung des Lagerungselements enden, ist es zweckmäßig, wenn die Aufnahmehülsen 16 jeweils an zwei oder sogar drei Seiten mit Ausschnitten 30 versehen sind, die jeweils um 90° zueinander versetzt sind, siehe Fig. 3.

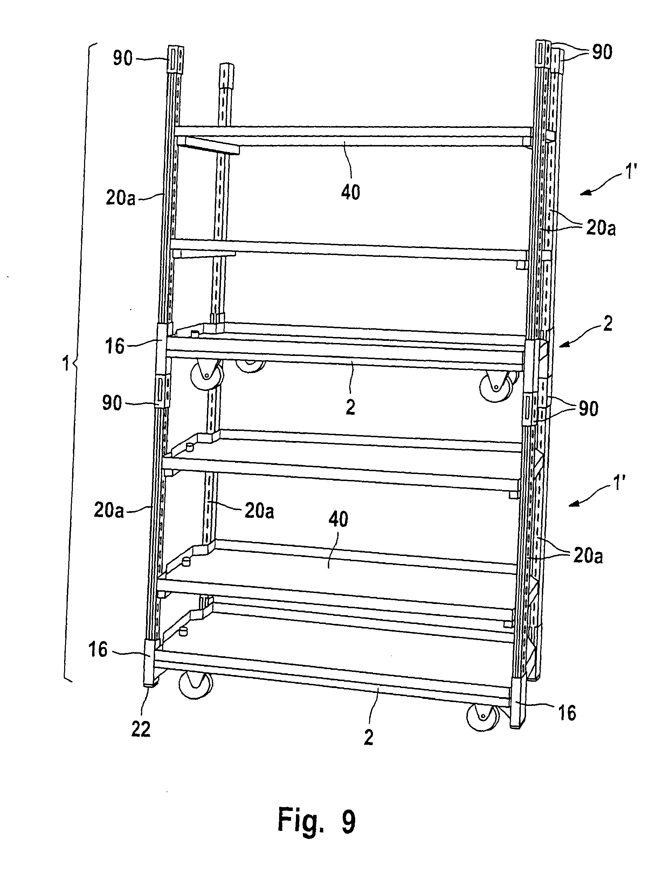

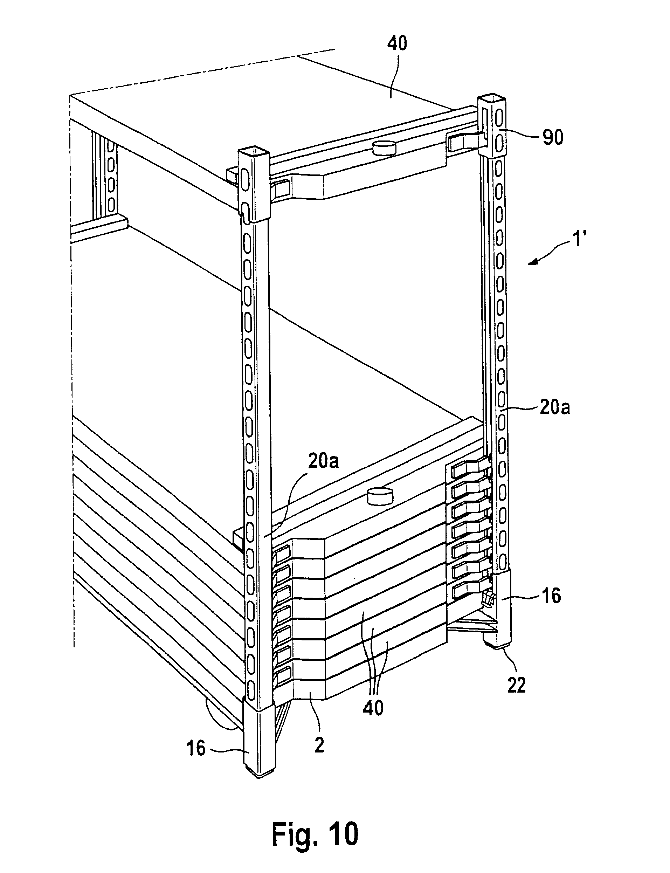

Wie Fig. 9 und 10 zeigen, besteht bei einer Unterteilung der Tragstangen 20 in zwei vorzugsweise identische Teile 20a, von denen jedes etwa Tischhöhe hat, die Möglichkeit, beim Transport in einem LKW o.ä. jeweils zwei niedrige Lagerungsvorrichtungen 1', die jeweils etwa Tischhöhe haben, übereinander gestapelt anzuordnen, wenn jedes Tragstangenteil an seinem oberen Ende, an dem es teilbar mit einem weiteren Tragstangenteil verbunden werden kann, eine außen fixierte Steckhülse 90 aufweist, die entweder ein weiteres Tragstangenteil oder - wie hier - ein Zentrierelement 22 (vgl. Fig. 7) eines weiteren Sockelelements 2 auf nehmen kann. Bei einer solchen Anordnung sind in ein unteres Sockelelement vier Tragstangenteile 20a eingesetzt, die jeweils etwa Tischhöhe haben und in die eine oder mehrere Lagerungselemente 40 eingehängt sind, wobei auf die oberen Enden der vier Tragstangenteile ein weiteres Sockelelement 2 aufgesetzt ist, das ebenfalls mit vier Tragstangenteilen 20a versehen ist, in die mehrere Lagerungselemente 40 eingehängt sind (Fig. 9). Dabei greifen die Zentrierungen bzw. Anschläge 22 des oberen Sockelelements zentrierend und sichernd in die oberen Enden der an den Tragstangenteilen der unteren Lagerungsvorrichtung 1' angebrachten Steckhülsen 90. Nach dem Transport müssen dann die jeweiligen Mitarbeiter nur noch die obere Lagerungsvorrichtung 1' abnehmen und erhalten dadurch zwei fertige, rollbare Lagerungs-oder Präsentationstische. Auf diese Weise wird ein erheblicher Zeitaufwand je Lagerungsvorrichtung eingespart, da beispielsweise Pflanzen, die auf den Lagerungsvorrichtungen 1' gelagert sind, nicht auf Bewässerungstische umgepackt werden müssen. Die beiden Lagerungsvorrichtungen 1' bilden sowohl einzeln als auch in der Anordnung nach Fig. 9 eine Lagerungsvorrichtung im Sinne der Erfindung, und selbstverständlich auch in der Anordnung nach Fig. 1, in der eine Lagerungsvorrichtung 1 mittels vier zusätzlicher Tragstangen 20b, die endseitig von oben in die Steckhülsen 90 der unteren Tragstangen 20a gesteckt sind, zu einer Lagerungsvorrichtung 1 mit größerer Höhe erweitert ist.

Fig. 10 zeigt eine Anordnung, in der die Tragstangen so in das Sockelelement eingesteckt sind, daß die Längsschlitze 26 der Tragstangen zueinander weisen, so daß eine relativ große Anzahl von Lagerungselementen aufeinanderliegend und auf dem Sockelelement aufliegend gestapelt werden können, während Fig. 9 eine Anordnung zeigt, in der die Längsschlitze voneinander weg bzw. nach außen weisen, so daß eine gewünschte Anzahl von Lagerungselementen in die Tragstangen eingehängt werden können, entsprechend der Darstellung nach Fig. 1.

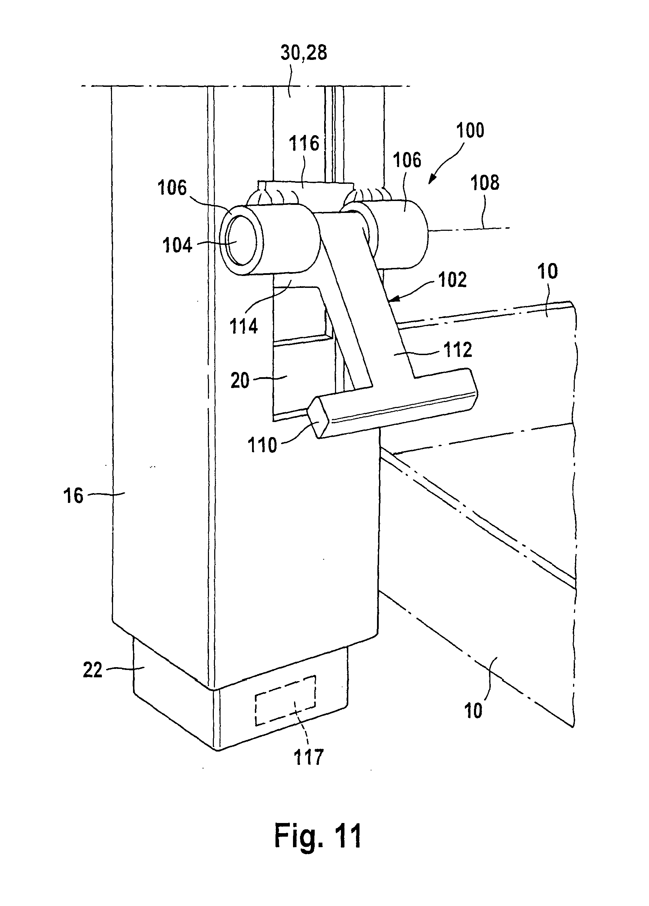

Wie bereits aus Fig. 3 andeutungsweise und aus Fig. 11 bis 13 , die einen Eckbereich eines Sockelelements 2 zeigen, im einzelnen ersichtlich ist, ist an jeder Aufnahmehülse 16 eines Sockelelements 2 ein lösbares Arretierungsmittel 100 angeordnet, mit dem die Möglichkeit besteht, eine (von oben) in die Aufnahmehülse eingeschobene Tragstange gegen unbeabsichtigtes Herausziehen zu verriegeln. In der dargestellten Ausführungsform weist das Arretierungsmittel 100 einen schwenkbaren Rasthebel 102 auf, der mittels zweier seitlicher Schwenkzapfen 104, die in zwei Lagerhülsen 106 gelagert sind, um eine horizontale bzw. parallel zu dem Boden 8 verlaufende Schwenkachse 108 schwenkbar ist. Die Lagerhülsen können im Querschnitt C-förmig und aus einem elastischen Material gefertigt sein, damit der Rasthebel bedarfsweise leicht ausgetauscht werden kann. Alternativ kann eine Lagerhülse vorgesehen sein, in die der Rasthebel mit einer Lagerachse, entsprechend einem der Schwenkzapfen 104, eingeschoben wird, wobei die Lagerachse an einem aus der Lagerhülse vorstehenden Ende mittels eines aufgesetzten Sicherungselements gesichert ist, z.B. Sprengring oder Schnellbefestiger.

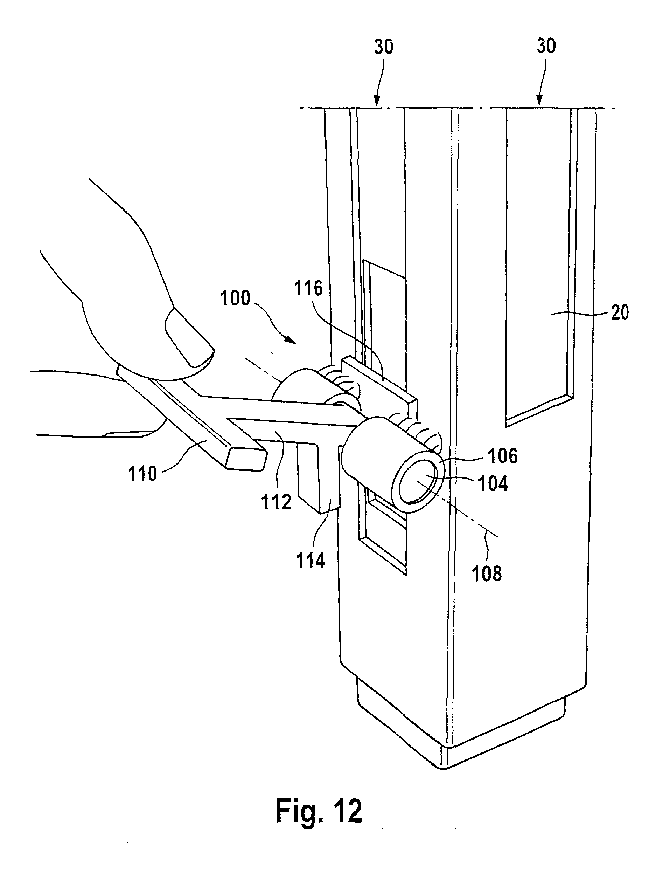

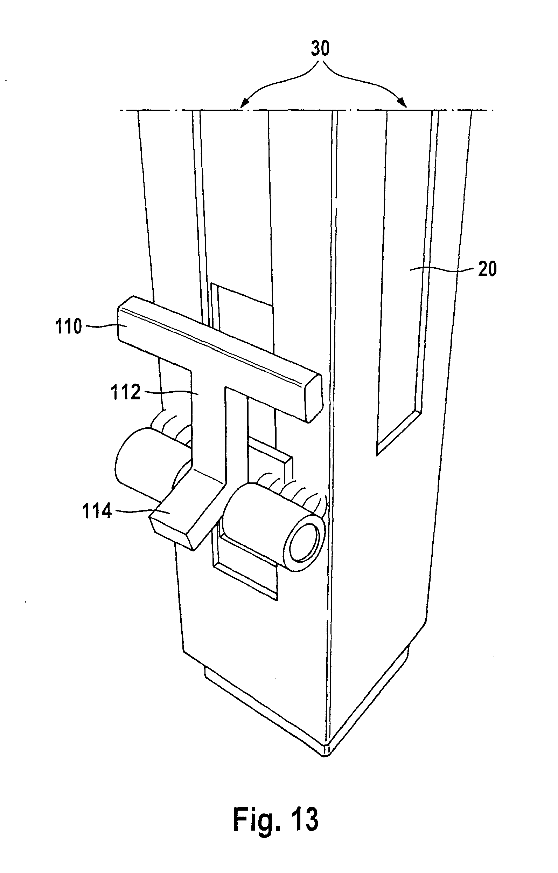

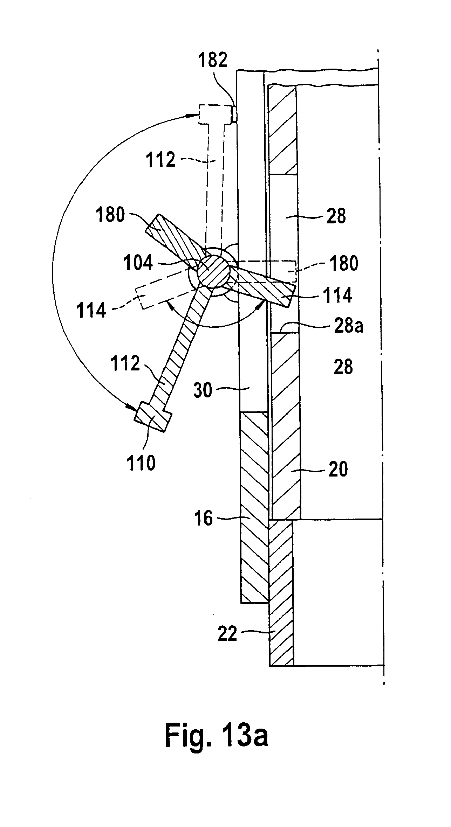

Der Rasthebel 102 ist an einem freien, den Schwenkzapfen 104 gegenüberliegenden Ende mit einem T-förmig angesetzten Gewicht 110 versehen, so daß er unter Schwerkraftwirkung selbsttätig in den in Fig. 11 dargestellten Haltezustand fällt. Der das Gewicht 110 tragende Bereich des Rasthebels 102 bildet einen Betätigungsarm 112, mit dem der Rasthebel durch eine Bedienungsperson mit einer Hand oder einem Fuß in einen in Fig. 12 oder 13 dargestellten Lösezustand geschwenkt werden kann. Der Rasthebel 102 weist ferner einen Verriegelungsarm 114 auf, der unter einem Winkel von ca. 90° bis 120°, vorliegend etwa 105°, von dem Betätigungsarm 112 abgeht und in dem Haltezustand nach Fig. 11 in den Bereich des Schlitzes 30 der Aufnahmehülse 16 nach innen ragt. Ein Quersteg 116 oberhalb der Lagerhülsen 106 bildet einen Anschlag für den Verriegelungsarm 114, wenn dieser nach oben bzw. das Gewicht 110 nach unten schwenkt.

Eine Tragstange 20, die in eine Aufnahmehülse 16 eingesteckt ist, wie dies Fig. 11 bis 13 zeigen, weist gemäß Fig. 5 in ihrem unteren Endbereich entweder eine Einhängeausnehmung 28 oder einen Schlitzbereich zwischen zwei Stegen 70 auf, so daß bereits in zwei von vier möglichen Einsteckstellungen der Tragstangen eine Sicherung gegen unbeabsichtigtes Herausziehen dadurch gegeben ist, daß der Verriegelungsarm 114 entweder in den Bereich zwischen zwei Stegen 70 oder in eine Einhängeausnehmung 28 greift, wenn sich der Rasthebel 102 in seinem Haltezustand gemäß Fig. 11 befindet.

Wenn gewünscht ist, daß die Tragstange 20 in jeder möglichen Einsteckstellung selbsttätig verriegelt ist, müssen auch in den in Fig. 5 links und rechts dargestellten, normalerweise ohne irgendwelche Ausnehmungen versehenen Seitenwandbereichen im Bereich der beiderseitigen Endabschnitte entsprechende Öffnungen eingearbeitet sein, in die der Rasthebel 102 mit seinen Verriegelungsarm 114 eingreifen kann. Bei Tragstangen, die an drei Seiten mit Einhängeausnehmungen 28 versehen sind, ist dies der Fall.

In Abwandlung der Ausführung des Arretierungsmittels 100, wie es in Fig. 11 bis 13a dargestellt ist, kann vorgesehen sein, daß der Rasthebel 102 höher, d.h. näher an dem oberen Endabschnitt der Aufnahmehülse 16 angebracht ist, und daß das Zentrierelement 22 länger ausgeführt ist, so daß bei einem Aufsetzen einer Sockelplattform auf eine andere der Verriegelungsarm 114 des Rasthebels 102 in eine zu diesem Zweck in dem Zentrierelement 22 eingearbeitete Öffnung eingreifen kann. Die hierfür erforderliche Öffnung ist in Fig. 11 gestrichelt angedeutet und mit 117 bezeichnet. Bei einer solchen Ausführung, bei der die Position des Rasthebels 102 (Arretierungsmittel 100) an die Position der Öffnung 117 angepaßt ist, können beide Elemente miteinander zusammenwirken, wenn zwei Sockelelemente aufeinandergesetzt werden. Auch hier ist eine Ausführung entsprechend Fig. 13a möglich, d.h. mit einem Festhaltemittel und einem Lösemittel 180, wie es weiter unten noch im einzelnen beschrieben ist.

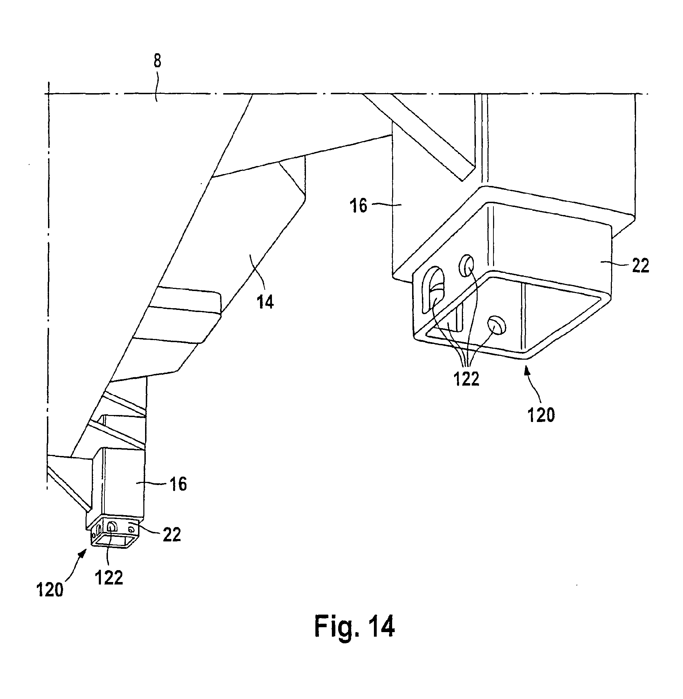

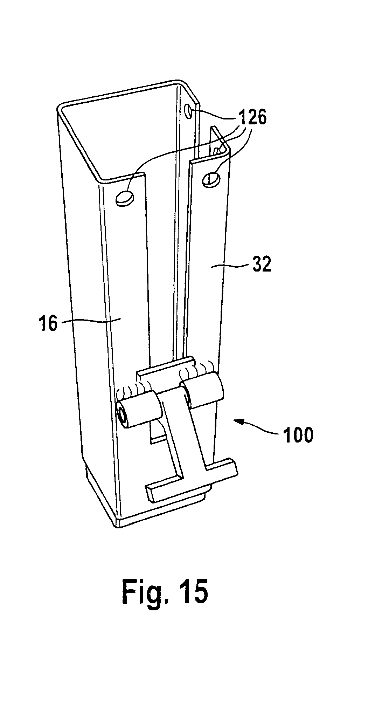

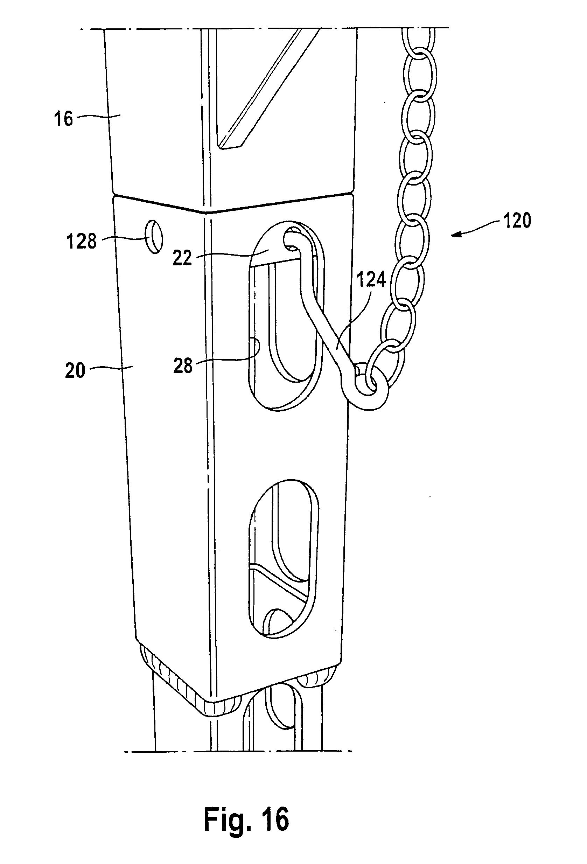

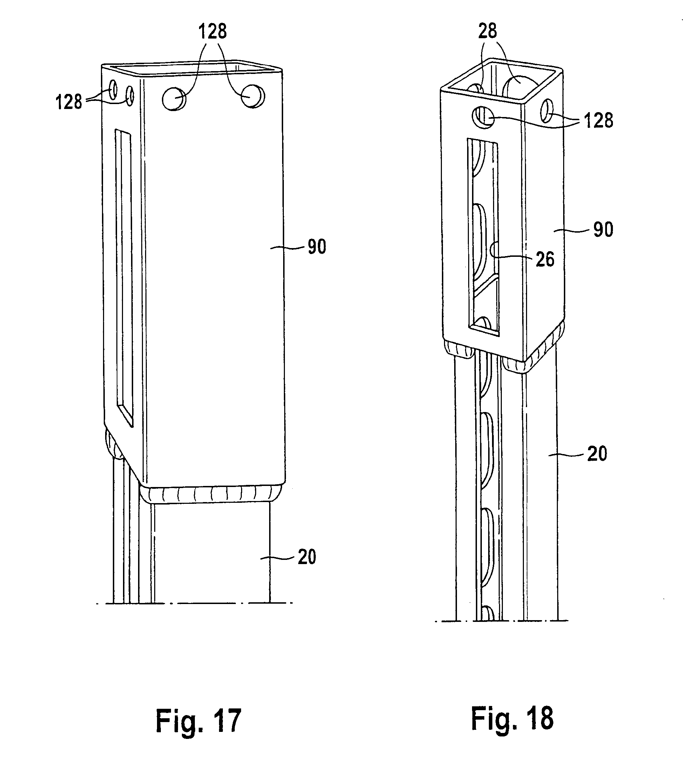

Fig. 14 zeigt ein lösbares Sockelarretierungsmittel 120, bestehend aus einem mit zwei oder mehr Öffnungen 122 versehenen Zentrierelement 22 an der Aufnahmehülse 16 (Fig. 3). Das Sockelarretierungsmittel 120 wirkt mit entsprechenden Öffnungen (entsprechend Position 126 in Fig. 15) im oberen Endbereich einer Aufnahmehülse 16 eines weiteren Sockelelements 2 zusammen, bspw. mit einem Haken 124 (Fig. 16). Alternativ wirkt das Sockelarretierungsmittel 120 mit entsprechenden Bohrungen bzw. Öffnungen (entsprechend Position 128 in Fig. 16 - 18) im Endbereich einer Tragstange 20 zusammen, auf die das Sockelelement 16 von oben aufsetzbar ist, wie dies (Öffnungen nicht dargestellt) Fig. 9 zeigt, wo das obere Sockelelement 2 auf den Steckhülsen 90 der unteren Tragstangen 20a aufliegt.

Wie Fig. 16 zeigt, kann hierbei das Sockelarretierungsmittel 120 beispielsweise einen an einer Kette unverlierbar gehaltenen Haken 124, einen Feder- oder Klappsplint, Stift, Bolzen oder ähnliches umfassen, so daß eine Sicherung dagegen besteht, daß die Aufnahmehülse 16 und das zugehörige Sockelelement unbeabsichtigt von einer darunter angeordneten Tragstange 20 oder von der entsprechenden Aufnahmehülse eines unmittelbar darunter angeordneten weiteren Sockelelements abgehoben wird.

Aufgrund der schlitzförmigen Ausschnitte 30, mit denen die Aufnahmehülsen 16 versehen sind, bleibt im oberen Endbereich der Aufnahmehülsen 16 ein schmaler Eckbereich 32 (Fig. 15) stehen, der wenig zur mechanischen Stabilität der Aufnahmehülse beiträgt und daher oberhalb des Arretierungsmittels 100 wegfallen kann. Wenn dies der Fall ist, müssen die der Arretierung dienenden Öffnungen 126 in Eckbereichen angeordnet werden, die dem Bereich 32 benachbart sind oder gegenüberliegen, so wie dies in Fig. 15 dargestellt ist.

Damit sichergestellt ist, daß auch bei einer gemäß Fig. 5 oder 8 ausgebildeten Tragstange eine Sicherung in jeder Einsteckposition (vier um 90° gegeneinander versetzte Postionen sind bei quadratischem Stangenquerschnitt möglich) der Tragstange möglich ist, sind in den Endbereichen der Tragstangen, wie Fig. 16, 17 und 18 zeigen, je Seite der Steckhülse 90 eine oder zwei Bohrungen 128 vorgesehen (zwei kleinere oder eine größere), um eine Sicherung mit einem Haken 124 o.ä., entsprechend Fig. 16, bewerkstelligen zu können. Diejenigen Seiten, in denen die Ausnehmungen 28 oder der Längsschlitz 26 angeordnet sind, müssen nicht unbedingt mit einer Öffnung 128 versehen sein, da die Arretierung über den oberen, endseitigen Rand der letzten Ausnehmung 28 oder des Längsschlitzes 26 erfolgen kann.

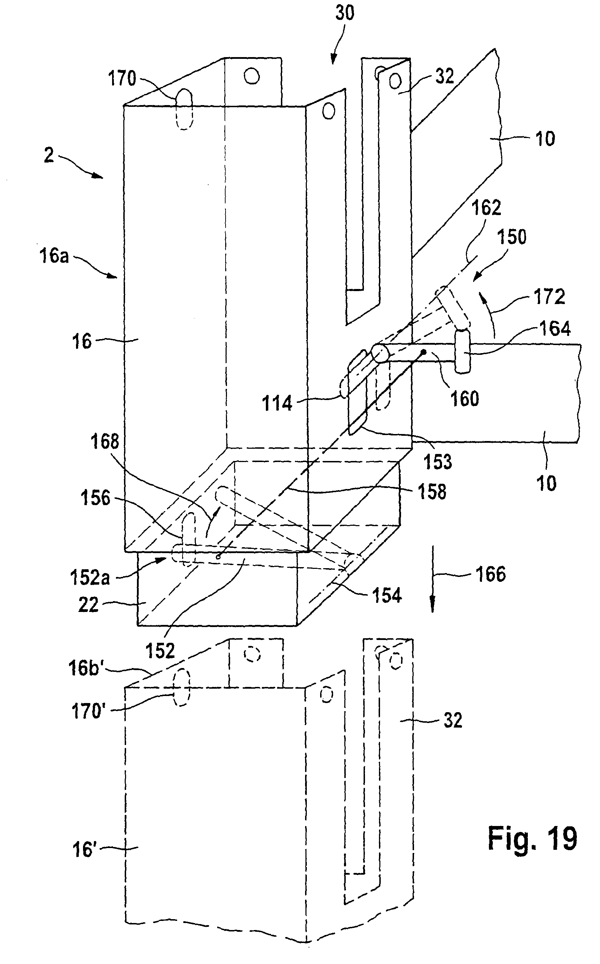

Fig. 19 erläutert ein alternatives Sockelarretierungsmittel 150. Fig. 19 zeigt einen Eckbereich eines Sockelelements 2 mit einer Aufnahmehülse 16 und angedeuteten Seitenwänden 10, wobei unter der Aufnahmehülse 16 ein oberes Ende einer weiteren Aufnahmehülse 16' eines darunter angeordneten Sockelelements gestrichelt angedeutet ist. Das Arretierungsmittel 150 soll in diesem Falle der lösbaren Arretierung der beiden Sockelelemente aneinander dienen.

Die Aufnahmehülse 16 ist an ihrem unteren Ende, wie dies bereits beispielsweise aus Fig. 11 hervorgeht, mit einem Anschlag- und Zentrierelement 22 versehen, das an bzw. in einem unteren Endabschnitt der Aufnahmehülse 16 angebracht ist. Innerhalb des Zentrierelements 22, das so wie die Aufnahmehülse 16 als Rohrstück mit einem freien quadratischen Innenquerschnitt ausgebildet ist, ist eine Rastklinke 152 um eine Schwenkachse 154 schwenkbar gehalten. Die Rastklinke 152 steht mit einem der Achse 154 gegenüberliegenden Endabschnitt 152a durch eine in dem Zentrierelement 22 vorgesehene Öffnung 156 nach außen vor. Die Länge der Rastklinke 152 ist so bemessen, daß der Endabschnitt 152a der Rastklinke in etwa in einer Ebene liegt, die mit einer der Achse 154 gegenüberliegenden Außenfläche 16a der Aufnahmehülse 16 übereinstimmt. Dadurch ist gewährleistet, daß der Endabschnitt 152a in etwa um die Wanddicke der Aufnahmehülse 16 aus dem Zentrierelement 22 vorsteht, wobei diese Wanddicke in etwa auch gleich der Wanddicke einer Steckhülse 90 der Tragstangen 20 entspricht. Außerdem ist sichergestellt, daß der Endabschnitt 152a nicht oder nur unwesentlich über die Außenfläche der Aufnahmehülse 16 vorsteht, was den Vorteil hat, daß die Rastklinke 152 beim engen Zusammenstellen mehrer Sockelelemente oder Lagerungsvorrichtungen nicht stört.

Die Rastklinke 152 ist über ein Zug- oder Betätigungsmittel 158, beispielsweise ein Draht-oder Kunststoffseil oder eine gerade oder abgewinkelte Verbindungsstange, die durch eine Öffnung 153 geht, mit einem Rast- oder Betätigungshebel 160 verbunden. Der Betätigungshebel 160 ist seitlich an der Aufnahmehülse 16 um eine zu der Achse 154 parallele Achse 162 schwenkbar angebracht und an einem freien Endabschnitt mit einem Gewicht 164 versehen.

Beim Aufsetzen eines Sockelelements 2, das an einer oder mehreren Aufnahmehülsen 16, zweckmäßigerweise an zwei diagonal gegenüberliegenden oder an allen vier Aufnahmehülsen, mit jeweils einem Sockelarretierungsmittel 150 nach Fig. 19 versehen ist, auf ein anderes Sockelelement, von dem eine Aufnahmehülse 16' in Fig. 19 gestrichelt angedeutet ist, in Pfeilrichtung 166, greift zunächst das Zentrierelement 22 in den oberen freien Endabschnitt der Aufnahmehülse 16'. Bei einer weiteren Abwärtsbewegung kommt der obere Rand 16b' mit dem freien Endabschnitt 152a der Rastklinke 152 in Kontakt und beginnt, diese in Pfeilrichtung 168 um die Achse 154 zu verschwenken. In der Aufnahmehülse 16' ist in Ausrichtung mit der Öffnung 156 eine Öffnung 170' ausgebildet, in die die Rastklinke 152 mit ihrem freien Endabschnitt 152a einfällt, sobald sie ausreichend weit nach oben und ins Innere des Zentrierelements 22 verschwenkt worden ist, um einen Materialsteg zwischen Öffnung 170' und Rand 16b' zu passieren.

Das Sockelarretierungsmittel 150 arretiert somit das von oben aufgesetzte Sockelelement 2 selbsttätig an einem unteren Sockelelement oder an Steckhülsen 90 von vier nach oben hin frei endenden Tragstangen einer Lagerungsvorrichtung, sofern die Steckhülsen mit einer Öffnung entsprechend der in Fig. 19 mit 170 bezeichneten Öffnung versehen sind.

Je nachdem ob das Zugmittel 158 biegeweich oder starr ist, wird beim Aufsetzen und Einrasten des Sockelarretierungsmittels 150 der Betätigungshebel 160 in Schwenkrichtung 172 vorübergehend nach oben in die in Fig. 19 gestrichelt dargestellte Position geschwenkt. In jedem Falle ist es durch Hochschwenken des Betätigungshebels 160 in Richtung 172 möglich, über das Zugmittel 158 die Rastklinke 152 anzuheben und so in eine nicht verriegelnde Stellung zu bringen, so daß das Sockelelement 2 von der darunter befindlichen Struktur abgehoben werden kann.

In bevorzugter Weise ist der Betätigungshebel 160 so ausgebildet, wie dies in Fig. 11 bis 13 dargestellt ist, nämlich mit einem Verriegelungsarm 114, der in Fig. 19 ebenfalls dargestellt ist und der durch die Öffnung 153 ins Innere der Aufnahmehülse 16 greift. Auf diese Weise bildet das in Fig. 19 dargestellte Sockelarretierungsmittel gleichzeitig sowohl ein Arretierungsmittel nach Art des Arretierungsmittels 100, nämlich für von oben in die Aufnahmehülsen 16 eingesteckte Tragstangen 20, als auch ein Sockelarretierungsmittel wie vorstehend beschrieben zur Arretierung eines Sockelelements auf einem anderen oder auf vier Tragstangen. Mit einer einzigen manuellen Betätigung, nämlich dem Anheben des Betätigungshebels 160, der dem Betätigungsarm 112 entspricht, können dann zwei Verriegelungen gleichzeitig gelöst werden.

Anders als in Fig. 19 dargestellt ist, kann die Rastklinke 152, die Achse 154 sowie die Öffnungen 170 in einer um 90° gegenüber der Darstellung nach Fig. 19 versetzten Anordnung in der Aufnahmehülse bzw. dem Zentrierelement 22 angeordnet sein, und zwar zweckmäßigerweise von oben gesehen im Gegenuhrzeigersinn versetzt. In diesem Fall würde der freie Endabschnitt 152a der Rastklinke 152 im Bereich einer Schmalseite des Sockelelements 2 vorstehen, was ebenfalls unproblematisch wäre. Lediglich eine Anordnung, die gegenüber der Darstellung in Fig. 19 entweder um 180° oder im Uhrzeigersinn von oben gesehen um 90° versetzt ist, wäre ungünstig, da bei einer mittigen Anordnung der Rastklinke 152 in bezug auf den inneren freien Querschnitt der Aufnahmehülse 16 kein Material vorhanden wäre, um die Öffnungen 170 unterzubringen, weil benachbart zu dem Eckbereich 32 die schlitzförmigen Ausnehmungen 30 vorgesehen sind.

Sowohl bei dem Arretierungsmittel 100 nach Fig. 11 bis 13 als auch bei dem Sockelarretierungsmittel 150 kann es zweckmäßig sein, wenn ein Festhaltemittel für den gelösten Zustand vorgesehen ist, um eine einhändige Bedienung auch dann zu ermöglichen, wenn eine Lagerungsvorrichtung zwei oder vier einzelne Arretierungsmittel aufweist. Ein solches Festhaltemittel könnte beispielsweise darin bestehen, daß bei einem Betätigungshebel eine Übertotpunktlage für den gelösten Zustand gewählt wird, oder daß ein separates Festhaltemittel in Form eines Hakens, eines Magneten oder ähnliches vorgesehen ist.

Fig. 13a zeigt eine Variante des Arretierungsmittels 100 gemäß Fig. 11 bis 13, bei der ein Lösemittel 180 vorgesehen ist, welches bewirkt, daß das Arretierungsmittel 100 aus dem durch das Festhaltemittel festgehaltenen gelösten Zustand selbsttätig in den Haltezustand zurückkehrt, wenn eine Tragstange 20 aus der Aufnahmehülse 16 herausgezogen wird.

Zu diesem Zweck ist ein Lösemittel in Form eines Lösearms 180 auf dem Schwenkzapfen 104 befestigt. Der Lösearm 180 ist in bezug auf die Schwenkachse 108 relativ zu dem Verriegelungsarm 114 um einen solchen Winkel versetzt angeordnet, daß der Lösearm 180 im Lösezustand durch den Ausschnitt 30 in die Einhängeausnehmung 28 der Tragstange 20 greift, wie dies gestrichelt in Fig. 13a dargestellt ist. Der Betätigungsarm 112 liegt in diesem Beispiel gegen die Aufnahmehülse 16 an und ist in dieser Stellung beispielsweise aufgrund einer Übertotpunktstellung oder mittels eines Magneten 182 (Festhaltemittel) festgehalten. Beispielsweise kann eine einzelne Person mehrere derartige Arretierungsmittel an ein und derselben Lagerungsvorrichtung bzw. einem Sockelelement nacheinander in die in Fig. 13a gestrichelt dargestellte festgehaltene Lösestellung bringen. Anschließend können eine oder mehrere Tragstangen 20 nacheinander oder gleichzeitig aus einer oder mehreren Aufnahmehülsen 16 herausgezogen werden. Dabei wirkt ein unterer Rand 28a der Einhängeausnehmung 28, in die der Lösearm 180 greift, mit diesem zusammen und verschwenkt so den Rasthebel 102, bestehend aus Schwenkzapfen 104, Betätigungsarm 112, Gewicht 110, Verriegelungsarm 114 und Lösearm 180, im Gegenuhrzeigersinn gemäß der Darstellung in Fig. 13a. Dabei gleitet ggf. der Verriegelungsarm 114 noch ein Stück weit auf der Außenseite der Tragstange 20 entlang, bis er von deren unterem Ende vollständig freigegeben wird und das Gewicht 110 den Rasthebel 102 ganz in die Ausgangsstellung entsprechend Fig. 11 bewegen kann, in der der Verriegelungsarm 114 ins Innere der Aufnahmehülse 16 vorsteht.

Diese Ausführungsform hat den Vorteil, daß nicht vergessen werden kann, das Arretierungsmittel in den verriegelungsbereiten Zustand zurückzubewegen, nachdem es zum Herausnehmen der Tragstange im Lösezustand festgehalten worden war.

Fig. 13a zeigt lediglich beispielhaft eine Ausführung eines Festhalte- und Lösemittels für das Arretierungsmittel 100, während ähnliche Lösungen für die anderen beschriebenen Arretierungsmittel 120, 150 möglich sind.

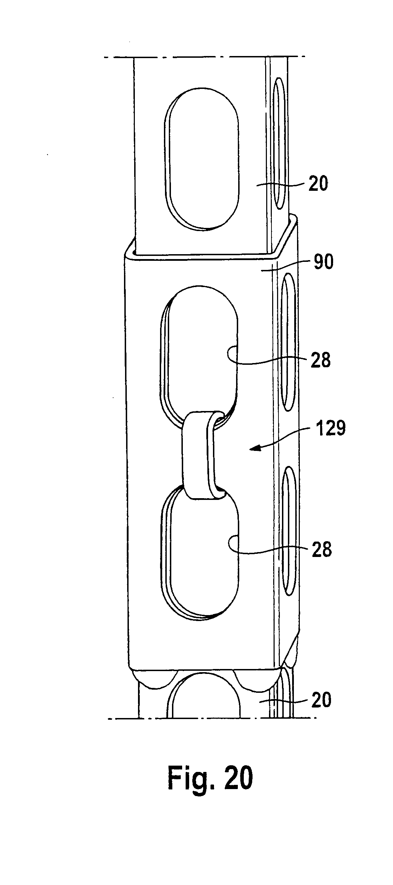

Fig. 20 erläutert ein lösbares Stangenarretierungsmittel 129 in Form einer U- oder C-förmigen Federklammer, die über die Stangenbereiche zwischen benachbarten Einhängeausnehmungen 28 geklemmt werden kann. Alternativ sind in überlappende Einhängeausnehmungen steckbare Verriegelungselemente möglich, deren Querschnitt ganz oder teilweise der Form der Einhängeausnehmungen entspricht.

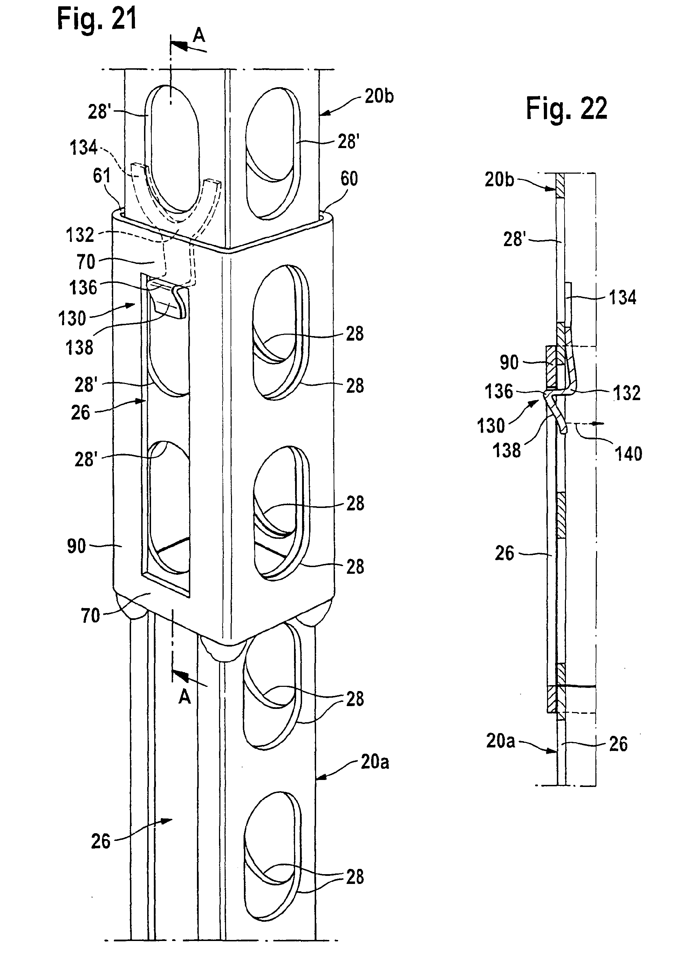

Fig. 21 erläutert ein alternatives Stangenarretierungsmittel 130, welches eine Federzunge 132 aufweist, die im Bereich einer Einhängeausnehmung 28' Endes einer eines Tragstange 20b angebracht ist, die von oben in ein oberes Ende einer Tragstange 20a eingesteckt ist.

Die Federzunge 132 weist zwei gegabelte Befestigungsschenkel 134 auf, die seitlich benachbart zu einer angrenzenden Einhängeausnehmung 28 beispielsweise durch Punktschweißen an der Innenseite der Tragstange 20b befestigt sind, um eine ausreichende federnde Länge zwischen den Befestigungspunkten und einer federnden, abgewinkelten Rastnase 136 der Federzunge 132 zu erzielen.

Die Rastnase 136 ist um etwa 90° gegenüber der Längsrichtung der Tragstange abgewinkelt und steht um einen Betrag über die Außenfläche der Tragstange vor, der etwa der Wandstärke der Tragstange bzw. der Steckhülse 90 (bzw. der Aufnahmehülse) entspricht.

Fig. 22 erläutert die Verriegelungswirkung zwischen der Federzunge 132 und einer Steckhülse 90 (hierbei kann es sich auch um eine Aufnahmehülse 16 einer Sockelplattform handeln) in einer Schnittdarstellung.

Die Federzunge 132 ist in Verlängerung der Rastnase 136 mit einer abgewinkelten Anlaufschräge 138 versehen, die dafür sorgt, daß die Federzunge 132 dann, wenn die Tragstange 20b in eine Steckhülse 90 einer anderen Tragstange 20a eingeschoben wird, in Richtung des Pfeils 140 entgegen ihrer Federkraft ausgelenkt und dabei ins Innere der Tragstange bewegt wird. Sobald die Rastnase 136 den Längsschlitz 26 oder eine Einhängeausnehmung 28 erreicht hat, federt die Federzunge 132 entgegen der Pfeilrichtung 140 zurück, so daß die Rastnase 136 den in Fig. 21 gezeigten verriegelten Haltezustand erreicht, in dem die Tragstange 20b gegen Herausziehen aus der Steckhülse 90 (bzw. der Aufnahmehülse) gesichert ist.

Wenn die Tragstange 20b herausgezogen werden soll, genügt ein Druck, etwa mit einem Finger, auf das freie Ende der Federzunge 132, etwa im Bereich der Anlaufschräge 138, um die Federzunge und die Rastnase 136 in Pfeilrichtung 140 zu verlagern und die Tragstange freizugeben.

Obwohl in Fig. 21, 22 die obere Tragstange 20b in einer Einsteckposition in die Steckhülse 90 dargestellt ist, in der die Federzunge 136 in den innerhalb der Steckhülse 90 befindlichen Teil des Längsschlitzes 26 greift, funktioniert die Verriegelung auch dann, wenn die obere Steckhülse 20a um 90° oder 180° gegenüber der Darstellung verdreht in die untere Tragstange 20a bzw. deren Steckhülse 90 (oder die Aufnahmehülse) eingesteckt wird, da dann die Rastnase 136 mit einer anderen Öffnung der Steckhülse 90 zusammenwirkt, nämlich mit einer der Einhängeausnehmungen 28. Sofern nur eine oder zwei Reihen von Einhängeausnehmungen 28 in den Tragstangen vorgesehen sind, ist es selbstverständlich zweckmäßig, im Bereich der Steckhülse 90 in den Seitenflächen Öffnungen vorzusehen, die den Öffnungen 128 entsprechen, damit eine Verriegelung zweier zusammengesetzter Tragstangen in jeder relativen Orientierung möglich ist. Entsprechendes gilt für die Aufnahmehülsen.

Eine Arretierung mit einer Federzunge entsprechend Fig. 21, 22 kann wie erwähnt auch für die Arretierung einer Tragstange in einer Aufnahmehülse 16 eines Sockelelements (Arretierungsmittel 100) eingesetzt werden, wenn in der Aufnahmehülse 16 entsprechende Öffnungen vorhanden sind, in die die Rastnase greifen kann. Unter Bezugnahme auf Fig. 19 können beispielsweise in den dem Eckbereich 32 gegenüberliegenden Seiten der Aufnahmehülse entsprechende Öffnungen eingearbeitet sein. Alternativ kann die Federzunge stirnseitig aus der Tragstange vorstehen, so daß die Rastnase einen von der Aufnahmehülse 16 abgekehrten (unteren) freien Rand des Zentrierelements 22 hintergreift. Eine solche Ausführung hat den Vorteil, daß die Federzunge zum Lösen einfach mit dem Fuß zurückgedrückt werden kann.

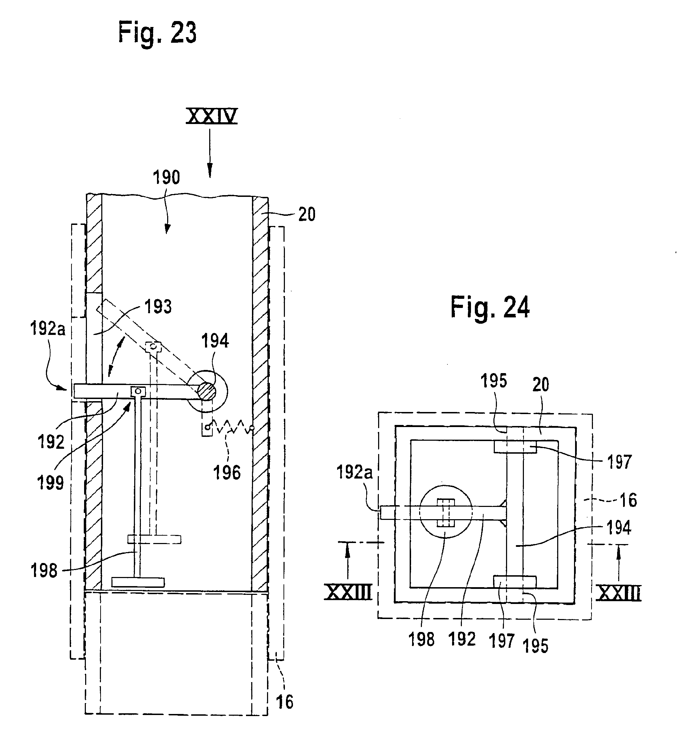

Fig. 23 und 24 zeigen in einer Längsschnittansicht und Draufsicht ein weiteres alternatives Stangenarretierungsmittel 190, welches zur Verriegelung einer Tragstange an einer Auf nahmehülse 16 eines Sockelelements (gestrichelt in Fig. 23 angedeutet) oder zur Verriegelung zweier Tragstangenteile (wie in Fig. 21 mit 20a, 20b bezeichnet) aneinander verwendet werden kann.

Auf einer Achse 194, die in Bohrungen 195 der Tragstange 20 gelagert ist, ist ein Rasthebel 192 schwenkbar gelagert, der mit seinem freien Endabschnitt 192a durch eine längliche Öffnung 193, die in der Tragstange 20 vorgesehen ist, nach außen vorsteht. Beiderseits auf der Achse 194 fixierte Scheiben 197 halten die Achse 194 sowie den Rasthebel 192 mittig innerhalb des freien Innenquerschnitts der Tragstange 20.

Eine Rückstellfeder 196, die in Fig. 23 angedeutet ist, kann vorgesehen sein, um den Rasthebel 192 in seine in Fig. 23 horizontal und mit ausgezogenen Linien dargestellte Ausgangs- oder Verriegelungsstellung zu halten bzw. in diese zurückzubewegen. Alternativ kann bereits das Eigengewicht des Rasthebels 192 zu diesem Zweck ausreichen.

Ein Lösestab 198 ist an einem Schwenkpunkt 199 schwenkbar an dem Rasthebel 192 angelenkt, um den Rasthebel von Hand von unten in seine in Fig. 23 gestrichelt dargestellte Lösestellung zu bewegen, in der der Endabschnitt 192a nicht mehr aus der Tragstange 20 nach außen vorsteht.

Beim Einsetzen einer Tragstange 20 in eine Aufnahmehülse 16 wird der Rasthebel 192 selbsttätig in Richtung auf die in Fig. 23 gestrichelt dargestellte Lösestellung verschwenkt, dadurch daß der Endabschnitt 192a auf die obere freie Kante der Aufnahmehülse 16 trifft, so daß bei weiterer Bewegung der Tragstange 20 in die Aufnahmehülse 16 der Rasthebel 192 verschwenkt wird.

Das in Fig. 11 bis 13a erläuterte Arretierungsmittel 100 könnte anstelle mit einem Rasthebel nach Art des alternativen Stangenarretierungsmittels 130 (Fig. 21, 22) mit einer Federzunge ausgebildet sein. Entweder im Inneren oder auf der Außenseite der Aufnahmehülse 16 kann eine Federzunge mit einer abgewinkelten Rastnase, ähnlich wie in Fig. 20 und 21 erläutert ist, angeordnet sein. Die Rastnase kann im Bereich eines Ausschnitts 30 angeordnet werden, um in eine Einhängeausnehmung 28 oder hinter einen Steg 70 einer Tragstange zu greifen, wenn diese in die Aufnahmehülse 16 eingesteckt ist.

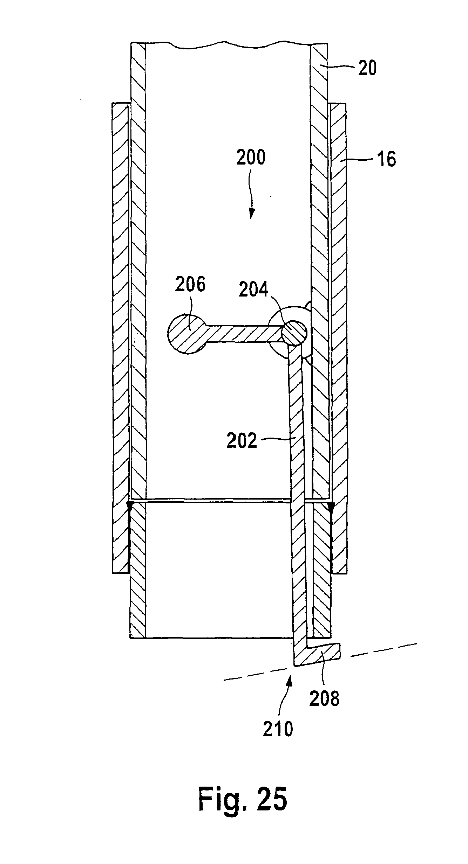

Fig. 25 zeigt eine weitere Variante eines Stangenarretierungsmittels 200 zur Verriegelung von zwei Tragstangenteilen 20a, 20b aneinander oder von einer Tragstange 20 an einem Sockelelement 2 (dargestellt). Ein Arm 202 ist um eine Achse 204 innerhalb der Tragstange 20 pendelnd aufgehängt und trägt an einem oberen Ende ein auskragendes Gewicht 206 und an seinem unteren Ende einen abgekröpften Arretierungsarm 208, der aus der Tragstange vorsteht. Das Gewicht hält den Arretierungsarm in seiner dargestellten, einen Rand einer Aufnahmehülse 16 oder eines Zentrierelements 22 untergreifenden Stellung. Von Hand kann der Arretierungsarm entriegelt (geschwenkt) und die Stange herausgezogen werden. An seiner Unterseite bildet der Arretierungsarm eine Auflaufschräge 210, die ein Einsetzen einer Tragstange in eine Aufnahmehülse 16 oder eine Steckhülse 90 eines weiteren Tragstangenteils erleichtert und den Arretierungsarm selbsttätig im Uhrzeigersinn (Fig. 25) verschwenkt. Anstelle des Gewichts kann eine Feder vorgesehen sein.

### Bezugszeichenliste

- 1: Lagerungsvorrichtung
- 1': niedrige Lagerungsvorrichtung
- 2: Sockelelement
- 4: Rolle
- 8: Boden
- 10: Seitenwand
- 12: Überlauf
- 14: Erweiterung
- 15: Schmalseite
- 16, 16': Aufnahmehülse
- 16b': oberer Rand
- 18: Verstärkung
- 20: Tragstange
- 20a: erster Teil
- 20b: zweiter Teil
- 22: Anschlag / Zentrierelement
- 26: Längsschlitz
- 28, 28': Einhängeausnehmung
- 2 8 a: unterer Rand
- 30: Ausschnitt
- 32: Eckbereich
- 40: Lagerungselement
- 41: Boden
- 42: Halterungselement
- 43: Schmalseite
- 44: Seitenwand
- 46: Einhänge-Endabschnitt
- 48, 48a: Ausnehmung
- 50: Längsseite
- 54: Erweiterung
- 58: Verstärkung
- 60: Stegabschnitt
- 61: Schenkelabschnitt
- 62: Randabschnitt
- 70: Steg
- 90: Steckhülse

- 100: Arretierungsmittel
- 102: Rasthebel
- 104: Schwenkzapfen
- 106: Lagerhülse
- 108: Schwenkachse
- 110: Gewicht

- 112: Betätigungsarm
- 114: Verriegelungsarm
- 116: Quersteg
- 117: Öffnung
- 120: Sockelarretierungsmittel
- 122: Öffnung
- 124: Haken
- 126, 128: Öffnung
- 129: Stangenarretierungsmittel
- 130: alternatives Stangenarretierungsmittel
- 132: Federzunge
- 134: Befestigungsschenkel
- 136: Rastnase
- 138: Anlaufschräge
- 140: Pfeil

- 150: Sockelarretierungsmittel
- 152: Rastklinke
- 152a: Endabschnitt
- 153: Öffnung
- 154: Achse
- 156: Öffnung
- 158: Zug- oder Betätigungsmittel
- 160: Rast- oder Betätigungshebel
- 162: Achse
- 164: Gewicht
- 166: Aufsetzrichtung
- 168, 172: Schwenkrichtung
- 170, 170': Öffnung
- 180: Lösemittel
- 182: Magnet (Festhaltemittel)

- 190: Stangenarretierungsmittel
- 192: Rasthebel
- 192a: Endabschnitt
- 193: Öffnung
- 194: Achse
- 195: Bohrung
- 196: Rückstellfeder
- 197: Scheibe
- 198: Lösestab
- 199: Schwenkpunkt

- 200: Stangenarretierungsmittel
- 202: Arm
- 204: Achse
- 206: Gewicht
- 208: Arretierungsarm
- 210: Auflaufschräge

## Patentansprüche

1. Lagerungs- und Transportvorrichtung (1, 1') mit einem im wesentlichen rechteckigen Sockelelement (2), das in vier Eckbereichen jeweils mit einer Aufnahmehülse (16) zum lösbaren Aufnehmen einer Tragstange (20, 20a, 20b) versehen ist, **dadurch gekennzeichnet, daß** mindestens eine der Aufnahmehülsen (16) mit einem lösbaren Arretierungsmittel (100) zum kraft- und/oder formschlüssigen Zusammenwirken mit einer Tragstange (20, 20a, 20b) versehen ist, wobei das Arretierungsmittel (100) ein Herausnehmen der Tragstange (20, 20a, 20b) aus der Aufnahmehülse (16) in einem Haltezustand verhindert und in einem Lösezustand zuläßt.

2. Vorrichtung nach Anspruch 1, **dadurch gekennzeichnet, daß** das Arretierungsmittel (100) formschlüssig mit einem Halterungsmittel (28) der Tragstange (20, 20a, 20b) zusammenwirkt.

3. Vorrichtung nach Anspruch 1 oder 2, **dadurch gekennzeichnet, daß** das Arretierungsmittel (100) ein in Öffnungen oder Bohrungen (126, 28, 26) der Aufnahmehülse (16) und der Tragstange (20, 20a, 20b) greifendes Verriegelungselement aufweist.

4. Vorrichtung nach Anspruch 3, **dadurch gekennzeichnet, daß** das Verriegelungselement als Federzunge (132) oder Haken (124) oder als Feder- oder Klappsplint ausgebildet ist.

5. Vorrichtung nach einem der Ansprüche 1 bis 3, **dadurch gekennzeichnet, daß** das Arretierungsmittel (100) als feder- oder gewichtsbelasteter, schwenkbarer Rasthebel (102) ausgebildet ist.

6. Vorrichtung nach Anspruch 5, **dadurch gekennzeichnet, daß** der Rasthebel (102) V-förmig abgewinkelt ist und einen in die Aufnahmehülse (16) schwenkbaren Verriegelungsarm (114) und einen von der Aufnahmehülse (16) vorstehenden Betätigungsarm (112) aufweist.

7. Vorrichtung nach Anspruch 6, **dadurch gekennzeichnet, daß** die Aufnahmehülse (16) rechteckigen oder quadratischen Querschnitt aufweist, wobei der Rasthebel (102) an einer Seitenwand um eine senkrecht zu einer Längsachse der Aufnahmehülse (16) angeordnete Schwenkachse (108) schwenkbar gehalten ist.

8. Vorrichtung nach einem der Ansprüche 6 oder 7, **dadurch gekennzeichnet, daß** der Rasthebel (102) an seinem Betätigungsarm (112) mit einem Gewicht (110) versehen ist.

9. Lagerungs- und Transportvorrichtung (1, 1') mit einem im wesentlichen rechteckigen Sockelelement (2), das in vier Eckbereichen jeweils mit einer Aufnahmehülse (16) zum Aufnehmen einer Tragstange (20, 20a,20b) versehen ist, **dadurch gekennzeichnet, daß** mindestens eine Aufnahmehülse (16) ein lösbares Sockelarretierungsmittel (120, 150) zum kraft- und/oder formschlüssigen Zusammenwirken mit einer Aufnahmehülse (16) eines darauf oder darunter gesetzten weiteren Sockelelements (2) und/oder einer darunter angesetzten Tragstange (20a, 20b) aufweist, wobei das Sockelarretierungsmittel (120, 150) ein Lösen des Sockelelements (2) von dem weiteren Sockelelement (2) oder von der Tragstange (20a, 20b) in einem Haltezustand verhindert und in einem Lösezustand zuläßt.

10. Vorrichtung nach Anspruch 9, **dadurch gekennzeichnet, daß** das Sockelarretierungsmittel (120, 150) ein in Öffnungen oder Bohrungen (126, 28, 26) der Aufnahmehülse (16) und der Tragstange (20, 20a, 20b) greifendes Verriegelungselement aufweist.

11. Vorrichtung nach Anspruch 10, **dadurch gekennzeichnet, daß** das Verriegelungselement als Federzunge (132) oder Haken (124) oder als Feder- oder Klappsplint ausgebildet ist.

12. Vorrichtung nach einem der vorangehenden Ansprüche, **dadurch gekennzeichnet, daß** mindestens eine Aufnahmehülse (16) unterseitig mit einem Zentrieransatz (22) zum zentrierenden Zusammenwirken mit einer Aufnahmehülse (16) eines darunter befindlichen, weiteren Sockelelements (2) oder mit einer von unten angesetzten Tragstange (20a, 20b) versehen ist.

13. Vorrichtung nach Anspruch 12, **dadurch gekennzeichnet, daß** der Zentrieransatz (22) aus der Aufnahmehülse (16) vorsteht und mit einer Öffnung (117) versehen ist, wobei das Sockelarretierungsmittel (150) und die Öffnung (117) so aufeinander abgestimmt positioniert sind, daß das Sockelarretierungsmittel (150) im Gebrauch mit einer Öffnung (117) eines Zentrieransatzes (22) eines weiteren Sockelelements (2) zusammenwirken kann.

14. Vorrichtung nach einem der Ansprüche 9 bis 13, **dadurch gekennzeichnet, daß** mindestens eine der Aufnahmehülsen (16) mit einem lösbaren Arretierungsmittel (100) zum kraft- und/oder formschlüssigen Zusammenwirken mit einer Tragstange (20, 20a, 20b) versehen ist, wobei das Arretierungsmittel (100) ein Herausnehmen der Tragstange (20, 20a, 20b) aus der Aufnahmehülse (16) in einem Haltezustand verhindert und in einem Lösezustand zuläßt.

15. Vorrichtung nach Anspruch 14, **dadurch gekennzeichnet, daß** das Sockelarretierungsmittel (120, 150) über ein Betätigungsmittel (158) gemeinsam mit dem Arretierungsmittel (100) betätigbar ist.

16. Vorrichtung nach Anspruch 14 oder 15 **dadurch gekennzeichnet, daß** das Arretierungsmittel (100) als feder- oder gewichtsbelasteter, schwenkbarer Rast- oder Betätigungshebel (102, 160) ausgebildet ist.

17. Vorrichtung nach Anspruch 16, **dadurch gekennzeichnet, daß** der Rast- oder Betätigungshebel (102, 160) V-förmig abgewinkelt ist und einen in die Aufnahmehülse (16) schwenkbaren Verriegelungsarm (114) und einen von der Aufnahmehülse (16) vorstehenden Betätigungsarm (112) aufweist.

18. Vorrichtung nach Anspruch 16 oder 17, **dadurch gekennzeichnet, daß** die Aufnahmehülse (16) rechteckigen oder quadratischen Querschnitt aufweist, wobei der Rast- oder Betätigungshebel (102, 160) an einer Seitenwand um eine senkrecht zu einer Längsachse der Aufnahmehülse (16) angeordnete Schwenkachse (162) schwenkbar gehalten ist.

19. Vorrichtung nach einem der Ansprüche 16 bis 18, **dadurch gekennzeichnet, daß** der Rast- oder Betätigungshebel (102, 160) an seinem Betätigungsarm (112) mit einem Gewicht (110, 164) versehen ist.

20. Vorrichtung nach einem der Ansprüche 14 bis 19, **dadurch gekennzeichnet, daß** das Sockelarretierungsmittel (150) eine Rastklinke (152) umfaßt, die innerhalb des Zentrierelements (22) um eine Schwenkachse (154) schwenkbar gehalten ist.

21. Vorrichtung nach Anspruch 20, **dadurch gekennzeichnet, daß** die Rastklinke (152) über ein Betätigungsmittel (158) mit dem Arretierungsmittel (100) verbunden ist.

22. Vorrichtung nach einem der Ansprüche 15 bis 21, **dadurch gekennzeichnet, daß** das Betätigungsmittel (158) als Seil, Kette oder Verbindungsstange ausgebildet ist.

23. Vorrichtung nach einem der vorangehenden Ansprüche, **dadurch gekennzeichnet, daß** in mindestens eine der Aufnahmehülsen (16) eine Tragstange (20; 20a, 20b) eingesetzt ist, die aus zwei oder mehr Stangenteilen (20a, 20b) zusammengesetzt sein kann, wobei an einem Endabschnitt der Tragstange (20; 20a, 20b) und/oder an mindestens einem Verbindungsbereich zwischen zwei Stangenteilen (20a, 20b) ein lösbares Stangenarretierungsmittel (130, 190, 200) zum kraft- und/oder formschlüssigen Zusammenwirken mit der Aufnahmehülse (16) oder den Stangenteilen (20a, 20b) angeordnet ist, wobei das Stangenarretierungsmittel (130, 190, 200) ein Lösen der Tragstange (20; 20a, 20b) von der Aufnahmehülse (16) oder Trennen der Stangenteile (20a, 20b) in einem Haltezustand verhindert und in einem Lösezustand zuläßt.

24. Vorrichtung nach Anspruch 23, **dadurch gekennzeichnet, daß** das Stangenarretierungsmittel (130) ein insbesondere in Öffnungen (26, 28, 128; 193) greifendes Verriegelungselement (124, 132, 208) aufweist.

25. Vorrichtung nach Anspruch 23 oder 24, **dadurch gekennzeichnet, daß** das Verriegelungselement als Federzunge (132), Arretierungsarm (208), Haken (124), Feder- oder Klappsplint, U- oder C-förmiger Bügel oder federarretiertes Steckelement ausgebildet ist.

26. Vorrichtung nach einem der Ansprüche 23 bis 25, **dadurch gekennzeichnet, daß** das Stangenarretierungsmittel (130) eine Federzunge (132) aufweist, die an einem Endabschnitt einer Tragstange (20a, 20b) oder eines Stangenteils (20a, 20b) gehalten ist und mit einem freien, federnden Endabschnitt (136) mit einer Öffnung in einer Aufnahmehülse (16) oder in einem anderen Stangenteil (20b, 20a) zusammenwirkt.

27. Vorrichtung nach einem der Ansprüche 25 oder 26, **dadurch gekennzeichnet, daß** die Stangenteile als Hohlprofile ausgebildet sind und die Federzunge (132) im Inneren eines Hohlprofils angeordnet ist.

28. Vorrichtung nach einem der Ansprüche 25 bis 27, **dadurch gekennzeichnet, daß** die Federzunge (132) an ihrem freien Endabschnitt einen hakenförmigen Rastabschnitt (136) aufweist, der in unbelastetem Zustand der Federzunge (132) aus dem Hohlprofil nach außen vorsteht.

29. Vorrichtung nach Anspruch 23, **dadurch gekennzeichnet, daß** die Tragstange (20a, 20b) als Hohlprofil ausgebildet ist und einen innerhalb des Hohlprofils gelagerten, feder- oder gewichtsbelasteten Rasthebel (192) trägt, der durch eine Öffnung (193) der Tragstange (20a, 20b) nach außen vorsteht.

30. Vorrichtung nach einem der Ansprüche 23 bis 25, **dadurch gekennzeichnet, daß** das Verriegelungselement als schwenkbar gelagerter, endseitig aus der Tragstange (20) oder einem Tragstangenteil (20a, 20b) vorstehender Arretierungsarm (208) gebildet ist.

31. Vorrichtung nach einem der vorangehenden Ansprüche, **dadurch gekennzeichnet, daß** sie ein Festhaltemittel (182) zum Festhalten des Arretierungsmittels (100) und/oder des Sockelarretierungsmittels (120, 150) in dem Lösezustand aufweist.

32. Vorrichtung nach Anspruch 31, **gekennzeichnet durch** ein Mittel (180) zum selbsttätigen Lösen des Festhaltemittels (182) beim Herausnehmen einer Tragstange (20) aus einer Aufnahmehülse (16) und/oder beim Lösen eines Sockelelements (2) von einem weiteren Sockelelement (2).
